# EUROPÄISCHE PATENTANMELDUNG

(11) **EP 3 945 071 A2**
(43) Veröffentlichungstag der Anmeldung: **02.02.2022**
(21) Anmeldenummer: 21020394.9
(22) Anmeldetag: 02.08.2021
(51) Int. Cl.: C02F 1/24, C02F 1/54, C02F 1/28, B01J 4/02, B03D 1/14

(54) **WASSERAUFBEREITUNGSVERFAHREN ZUR ENTFERNUNG VON SCHADSTOFFEN, WASSERAUFBEREITUNGSANLAGE HIERFÜR SOWIE ENTNAHMEEINSATZ**

(30) Priorität: 31.07.2020 DE 102020004662
(71) Anmelder: Zahnen Technik GmbH, 54687 Arzfeld (DE)
(72) Erfinder: Zahnen, Herbert, D-54687 Arzfeld (DE); Ney, Benedikt, D-54313 Zemmer (DE); Poppelreiter, Nils, D-54570 Mürlenbach (DE)
(74) Vertreter: Kutsch, Bernd

(57) **Zusammenfassung**

Die Erfindung betrifft ein Wasseraufbereitungsverfahren zur Entfernung von Schadstoffen, eine Wasseraufbereitungsanlage hierfür sowie eine Entnahmeeinrichtung. Bei einem erfindungsgemäßen Wasseraufbereitungsverfahren laufen in dem oberen Behälterbereich die in der Trombe aufkonzentrierten Agglomerate in eine zumindest grob horizontal angeordnete Entnahmeeinrichtung (20, 20') über. Bei einer erfindungsgemäßen Wasseraufbereitungsanlage ist für ein Abschlagen der Agglomerate zumindest eine Entnahmeeinrichtung (20, 20', 20'') horizontal ausgerichtet oben in den Behälter (10, 10') eingesetzt angeordnet. Bei einer solchen Entnahmeeinrichtung (20, 20', 20'') ist erfindungsgemäß eine Dosiereinrichtung längs eines Aufströmspalts angeordnet, um während des Aufströmens eine durch die Entnahmeeinrichtung nach oben gerichtete Spaltaufströmung oder Zirkelaufströmung nicht zu behindern.

## Beschreibung

Die vorliegende Erfindung betrifft ein Wasseraufbereitungsverfahren zur Entfernung von Schadstoffen, insbesondere von Mikroplastik, sowie eine Wasseraufbereitungsanlage hierfür, wie beispielsweise aus WO 2019/219106 A1 bekannt. Außerdem betrifft die Erfindung einen Entnahmeeinsatz zum Aufsetzen, Aufschrauben oder Einschweißen von oben auf bzw. in einen Behälter.

Die Verwendung eines anorganisch-organischen Hybridkieselsäurematerials ist in WO 2019/219106 A1 zur Darstellung eines Reaktionsprodukts als Agglomerat aus unter anderem Mikroplastik und Hybridkieselgel beschrieben.

Auch sind zur Reinigung von Abwässern, insbesondere zum Entfernen von groben Feststoffen und zur Beschleunigung chemischer Zersetzungsprozesse verschiedene technische Vorrichtungen bekannt. Der Stand der Technik in Deutschland sind beispielweise drei Reinigungsstufen mechanisch - biologisch - chemisch. Die WO 2019/219106 A1 schlägt eine vierte Stufe vor.

(Mikro-)Plastik, dessen chemische Zusatzstoffe, Pestizide, Pharmazeutika und deren Abbauprodukte / Transformationsprodukte, erreichen über verschiedene Eintrag- und Transportwege das Abwasser einer Kläranlage. Aktuelle Studien bestätigen, dass die Konzentrationen an verschiedenen Mikroschadstoffen in den vergangenen Jahren stetig angestiegen sind und die Komplexität zunimmt und dass die Verfahren des Stands der Technik ihre Limitierungen in der Wasserreinigung erreichen. Vorher hatten Erfinder namens Herbort und Schuhen in einem Fachartikel "Zwei Betrachtungswinkel - Kunststoffe - die Alltagshelfer oder Mikroplastik - das Umweltproblem?" veröffentlicht in Mitt Umweltchem Ökotox 23. Jahrg. 2017, Nr.4, S. 111-114 die Möglichkeit grob aufgezeigt, Hybridkieselsäurematerialien zur Entfernung anthropogener Verunreinigungen zu nutzen.

Ausgehend von diesem Stand der Technik bleibt es weiterhin ein technisches Problem, in industriellem Maßstab wirtschaftlich sinnvoll mit beispielsweise Mikroplastik belastetes Abwasser mit ausreichend gutem Wirkungsgrad aufzubereiten.

Diese Aufgabe wird erfindungsgemäß mit den Gegenständen der unabhängigen Patentansprüche gelöst, nämlich mittels eines Wasseraufbereitungsverfahrens nach Anspruch 1 oder mittels einer Wasseraufbereitungsanlage nach Anspruch 8 oder mittels einer Entnahmeeinrichtung nach Anspruch 12.

Vorteilhafte Ausführungsformen sind in Unteransprüchen angegeben.

Zwei vorteilhafte Ausführungsbeispiele zu verbesserten Trennverfahren und zwei vorteilhafte Ausführungsbeispiele zu drei Arten von Verfahrenstechnikinstallationen als besondere Entnahmeeinrichtungen sind anhand von Figuren näher erläutert.

Ein zumindest aus den abzutrennenden Schadstoffen Agglomerate bildender Zugabestoff, insbesondere ein anorganisch-organisches Hybridkieselsäurematerial, wird gemäß dem Stand der Technik dem zu behandelnden Wasser zudosiert, um in einem Mischbehälter eine rotierende Trombe auszubilden.

Erfindungsgemäß werden Agglomerate mittels einer Entnahmeeinrichtung ausgeleitet. Die Entnahmeeinrichtung ist oben in den Mischbehälter eingesetzt oder aufgesetzt, sodass die rotierende Flüssigkeit einen Überlauf der Entnahmeeinrichtung erreichen kann, sobald sein Füllstand eine Entnahmehöhe erreicht. In diesem Moment des Übertritts werden die Agglomerate mittels der Entnahmeeinrichtung aus der rotierenden Trombe nach oben und zur Seite entnommen.

Besonders bevorzugt wird ein unter dem Handelsnamen PE-X / AB 523985 vertriebenes Hybridmolekül mit einem Silizium-basierten Grundgerüst und organischen funktionellen Gruppen verwendet, allgemeine Summenformel (RSiOₘ)ₙ. Dieses Material ist zwar flüssig, hat aber ein viskoses öliges Aussehen. Die relative Dichte ist 1,01 g/ml. Es ist in Wasser unlöslich. Die Erfindung geht mit besonderen Dosierungseinrichtungen und Strömungsführungen darauf ein, um einen möglichst guten Wirkungsgrad zu garantieren, auch in organisch belasteten Wässern, die zum Schäumen neigen.

Das der Erfindung zugrundeliegende Problem wird gegenständlich gelöst durch eine Wasseraufbereitungsanlage zur Entfernung von insbesondere Mikroplastik aus zu reinigendem Wasser mit zumindest einem Mischbehälter, in dessen oder deren oberen Behälterbereich(en) in Trombe(n) aufkonzentrierte Agglomerate abgetrennt werden. Erfindungsgemäß ist für ein Abschlagen der Agglomerate zumindest eine Entnahmeeinrichtung, bevorzugt eine einzige Entnahmeeinrichtung je Behälter oder eine gemeinsame Entnahmeeinrichtung mehrerer Behälter, horizontal ausgerichtet oben in den Behälter eingesetzt angeordnet. Die Entnahmeeinrichtung durchbricht auf zumindest einer Seite die jeweilige Behälterseitenwand eines als Mischbehälter verwendeten Rührbehälters oder Rotationstrennbehälters einen zentralen Überlauf nach oben durchleitend (A) abgedichtet.

Die Ausgestaltung eines zentralen Überlaufs und die seitliche Ableitung abgeschlagener Agglomerate vom zentralen Überlauf weg nach außen sichert das Trennergebnis, dass sich mit der Ausbildung der Trombe zunächst nur quasi griffbereit angekündigt hatte. Es galt nun die sich dort als Trombe im zu reinigenden Wasser bewegenden Agglomerate möglichst gezielt auszutragen, was mittels den erfindungsgemäßen Entnahmeeinrichtungen gelungen ist.

Nach einer bevorzugten Ausführungsform sind im oberen Teil des Mischbehälters innen, bevorzugt oben im Aufströmspalt kegelförmige Leitbleche angeordnet, radial außen an die Behälterseitenwand anschmiegend und nach radial innen mittels einer der zirkulierenden Anströmung abgewandten Stützwand eine Strömungsturbulenz möglichst vermeidend abgestützt.

Nach einer weiteren vorteilhaften Ausführungsform ist in der Entnahmeeinrichtung zumindest eine zur durchbrochenen Behälterwand hin abfallende Rinne angeordnet, bevorzugt zwei parallel verlaufende Rinnen, die nach oben offen auf einem zwischen den Rinnen verlaufenden Aufströmspalt zugewandten Längsseiten jeweils gezahnt ausgebildet sind.

Das in der/den Entnahmeeinrichtung(en) (20, 20', 20") übergelaufene Agglomeratwasser (21) ist bevorzugt einer einzigen, insbesondere zentralen Siebeinheit, oder mehreren Siebeinheiten zugeführt.

Eine erfindungsgemäße Entnahmeeinrichtung ist für eine Wasseraufbereitungsanlage für den oben genannten Zweck ausgebildet, wenn sie die Bewegungsumkehr der in der Trombe rotierenden Agglomerate in zumindest eine radiale Richtung nach außen bewirkt, wie oben erwähnt nach Bewegungsumkehr am Ende bevorzugt durch zumindest eine abfallend ausgebildete Rinne. Die relevante Bewegungsumkehr in der Entnahmeeinrichtung wird erfindungsgemäß aber durch eine Aufnahme der Trombe in der Geometrie eines Aufströmspaltes oder eines Aufströmzirkels eingeleitet. Die jeweilige Entnahmeeinrichtung fängt zentral die rotierenden Agglomerate in der Spalt- bzw. Zirkelaufströmung und lässt sie gezielt in eine Rinnenanordnung übertreten.

Im Falle des in der Entnahmeeinrichtung ausgestalteten Aufströmspaltes ist gemäß einer besonders bevorzugten Ausführungsform einer erfindungsgemäßen Entnahmeeinrichtung eine Dosiereinrichtung längs des Aufströmspalts, bevorzugt integriert, angeordnet, um während des Aufströmens eine durch die Entnahmeeinrichtung nach oben gerichtete Spaltaufströmung oder Zirkelaufströmung nicht zu behindern, besonders bevorzugt als ein drehbares Rohrelement zum Abschluss eines Leitblechs oder als ein schwenkbarer Teleskopdosierstab.

Im Falle des zentralen Aufströmzirkels ist bevorzugt ein Ring mit besonders bevorzugt vertikal ausgerichteter Wandung ausgebildet, besonders bevorzugt mit nach unten trichterförmig radial nach außen geweiteter Wandung. Der Ring weist zumindest zu einer Seite hin eine Öffnung der Wandung zur Durchleitung von Agglomeratwasser in eine nach radial außen abfallend ausgebildete Rinne auf.

Eine vorteilhafte Entnahmeeinrichtung mit integrierter Dosiereinrichtung ist hier allerdings ohne Darstellung in Figuren ausschließlich beschrieben, aber dennoch eine bedeutsame vorteilhafte Ausführungsform der Erfindung.

Ausgehend von einer Wasseraufbereitungsanlage zur Entfernung von insbesondere Mikroplastik aus zu reinigendem Wasser mit zumindest einem Rotationsbehälter, in dessen oder deren oberen Behälterbereich(en) mittels ggf. je Rotationsbehälter einer oder einer gemeinsamen Entnahmeeinrichtung in Trombe(n) aufkonzentrierte Agglomerate des insgesamt rotierenden aufzubereitenden Wassers abgetrennt werden, ist/sind die Entnahmeeinrichtung(en) oder die gemeinsame Entnahmeeinrichtung erfindungsgemäß jeweils horizontal ausgerichtet auf zumindest einer Seite die jeweilige Behälterwand eines Rührbehälters oder Rotationstrennbehälters als Rotationsbehälter einen zentralen Überlauf durchleitend abgedichtet eingesetzt oder beispielsweise abdichtend aufgeschraubt oder aufgeflanscht.

Bevorzugte Ausführungsformen solcher Entnahmevorrichtungen haben Überlaufkanten mit besonderer Geometrie zur Beeinflussung des aus der Rotation nach oben in der Entnahmeeinrichtung auch in die Breite umgeleiteten Aufstroms und Überlaufs einer Agglomeratfraktion.

Diese erfindungsgemäße Verfahrenstechnik wird bevorzugt verwendet, wenn in mit Mikroplastik verunreinigtes Klar- oder Prozesswasser oder in aufzubereitendes Wasser einer vierten Reinigungsstufe nach ansonsten konventioneller mechanischer, chemischer und biologischer Behandlung das Hybridkieselsäurematerial zudosiert wurde, besonders bevorzugt gemäß einer vorteilhaften Ausführungsform der Erfindung aus der Luft durch einen vom Flüssigkeitspegel noch nicht erreichten Aufströmspalt oder Aufströmzirkel hindurch zudosiert.

Ein Erfolg des erfindungsgemäßen Verfahrens wie auch der erfindungsgemäßen Anlage ist es, dass in recht hoher Konzentration Mikroplastik entfernt werden kann, bevorzugt durch eine sensible auf die erfindungsgemäße Agglomeratbildung abgestimmte Pulsation im Mischbehälter aber auch mittels einer kontinuierlichen Verfahrensvariante ohne Pulsation.

Das Pulsieren kann auch als ein Atmen verstanden werden. Nach einem vorteilhaften erfindungsgemäßen Verfahren "atmet" der Mischbehälter nach oben durch die Entnahmeeinrichtung Agglomerate aus der zirkulierenden Flüssigkeit in erhöhter Konzentration aus, wenn unten Klarwasser nachgedrückt wird. Dann wird nach Überlauf möglichst vieler Agglomerate der Zulauf von Klarwasser unten nicht nur unterbrochen, sondern auch Klarwasser nach unten entlassen.

Unten ist, insbesondere unterhalb einer bevorzugt mittels Luftdosiereinrichtungen etablierten Blasensperrzone, mit sehr hoher Wahrscheinlichkeit kein Agglomerat aufzufinden. Eine Komplettentleerung findet im normalen Betrieb gemäß dem erfindungsgemäßen Verfahren nicht statt. Nun "atmet" der Rührbehälter wieder neues zu reinigendes Wasser ein, bis erneut nach Dosierung des Zugabestoffes und Rühren ein Aufkonzentrieren, Lokalisieren und Fixieren in der Trombe gelungen ist und die Agglomerate wieder für die erfindungsgemäße Bewegungsumformung zum Überlaufen durch den Aufströmspalt oder den Aufströmzirkel bereit sind.

Es gibt zwei Arten des oben bereits erwähnten kontinuierlichen Betriebs:
1. Verschaltung von mehreren Rühr- und / oder Rotationsbehältern als Mischbehälter, sodass es von außen betrachtet, also nach Summieren der Aktionen in verschiedenen Behältern volumenstrombilanziert, aussieht wie ein kontinuierlicher Prozess, oder
2. Betrieb eines einzigen Rühr- oder Rotationsbehälters als Mischbehälter mit einer durchgängigen oder gepulsten Beschickung mit belastetem Wasser.

### Zu 1 (Verschaltung von Reaktoren):

Beispielsweise werden drei Reaktoren in einem Container so verschaltet, dass zumindest beinahe nach außen ein kontinuierlicher Zu- und Ablauf bewirkt wird. Dabei funktioniert tatsächlich aber jeder der drei Reaktoren wie ein Batch-Reaktor. Eine Sieb- oder Filtereinheit, Zuführeinheit etc. gibt es gemäß dieser Ausführungsform aber nur einmal und alle Reaktoren würden abwechselnd oder einander überschneidend zumindest teilweise dieselben Komponenten nutzen.

Zu 2 (Betrieb eines einzigen Rühr- oder Rotationsbehälters mit einer durchgängigen Beschickung mit belastetem Wasser):
Der Reaktor, wie der Mischbehälter alternativ genannt wird, wird über eine Beschickungspumpe mit zu reinigendem Wasser befüllt, bis ein gewünschter Füllstand unterhalb eines Überlaufs erreicht ist. Die Zuführung des zu reinigenden Wassers erfolgt bevorzugt unmittelbar an der Oberfläche (Höhe Füllstand), tangential. Zusätzlich ist in besonders bevorzugten Ausführungsformen ein Sammelarm im Bereich der Flüssigkeitsoberfläche angeordnet. Der Sammelarm und die tangentiale Einströmung bewirken gemeinsam besonders prozesssicher, dass alle Partikel in Richtung einer Trombenmitte wandern. Während des gleichzeitig ablaufenden Lokalisierens und Fixierens wird in bevorzugten Verfahrensvarianten immer wieder Zugabestoff, insbesondere Kieselsäurematerial, dosiert.

Dieser kontinuierliche Prozess läuft dauerhaft, da permanent Wasser in den Reaktor eingebracht wird. Es bildet sich außen eine zirkulierende Strömung nach unten aus, während die Trombe in der Mitte wächst und wächst. Hat die Trombe, die - übrigens auch im diskontinuierlichen Betrieb oder der ersten kontinuierlichen Betriebsart - bevorzugt durch einen Aufströmspalt oder einen Aufströmzirkel einer Entnahmevorrichtung hindurch von oben mit einem Sensor und/oder einer Kamera beobachtet wird, eine gewisse Dichte erreicht, besonders bevorzugt unter zusätzlichem Abgleich eines Behälterfüllstandes, wird das Ansteigen des Wasserspiegels durch zusätzliches Befüllen, insbesondere mit Klarwasser, Brauchwasser oder Prozesswasser, von unten oder in einem Bereich etwa 1/3 Behälterhöhe über dem Behälterboden, besonders bevorzugt durch tangentiales Einspülen, bewirkt, bis die Trombe durch den Aufströmspalt bzw. den Aufströmzirkel zumindest zu einem großen Teil hat übertreten können. Das Ende des konzentrierten Trombenübertritts wird bevorzugt ebenfalls sensor- und/oder kameraüberwacht.

Im Weiteren wird oft nur der Begriff Klarwasser verwendet. Gemeint ist dabei in dieser Patentanmeldung immer jegliches Befüllwasser, das frei ist von oder zumindest nur noch geringfügig belastet ist mit den abzutrennenden Störstoffen, wie oben mit weiteren Beispielen erläutert: Prozesswasser, Brauchwasser usw..

Meldet das System einen ausreichenden Übertritt von Trombenwasser, kann die Klarwasserzufuhr (beispielsweise Brauchwasser) abgestellt werden und unten ggf. verstärkt gereinigtes Wasser abgelassen werden, damit der Überlauf nicht mehr stattfindet und ein neues Trombenwachstum, wie oben erläutert beginnen kann. Die Entleerung bis etwa 1/5 Behälterhöhe ist vorteilhaft, um einen Austrag von ungereinigtem Wasser weitgehend zu vermeiden.

Das Belüftungssystem vorteilhafter Ausführungsformen besteht aus mehreren unabhängigen unten in den Mischbehälter eingebauten Ringrohren, bevorzugt derer drei über den Radius des Rotations- oder Rührbehälters verteilt, besonders bevorzugt bei 25, 35 und 43 cm Radius im Fall eines Behälters mit einem Meter Durchmesser über denselben hinweg verteilt. Diese Ringrohre können unabhängig voneinander betrieben werden. Jeder Ring hat eine eigene Pumpe, die im Bereich von 10 % bis 100 % der max. Leistung betrieben wird. Die maximale Leistung jeder einzelnen Pumpe beträgt 8 1 Luft / min, besonders bevorzugt 1m³ Luft / h auf 24m³ Wasser / h oder 0,5m³ Luft / h auf 12 m³ Wasser / h dazwischen annähernd linear verlaufend verändert beim kontinuierlichen Verfahren und besonders bevorzugt belastungsabhängig ca. 120 l pro m³ beim diskontinuierlichen Verfahren. Mithilfe dieser neuen Konfiguration können unterschiedliche Belüftungsszenarien auf den jeweiligen Anwendungsfall angepasst werden. Der Verschmutzungsgrad des Wassers, die Dichteverteilung der Mikroplastikpartikel, die gewünschte oder erforderliche Fahrweise diskontinuierlich oder kontinuierlich können eingestellt werden.

Die Entnahmeeinrichtung oder ein Behälterdeckel weist gemäß einer weiteren vorteilhaften Ausführungsform eine Hybridkieselsäurematerial-Dosiereinrichtung für und/oder eine Düsenanordnung zum Beregnen, beispielsweise mit einem weiteren Zugabestoff oder nur mit Klarwasser, oder Freiblasen der Wasseroberfläche während des Dosierens auf.

Die Dosiereinrichtung ist bevorzugt längs des Aufströmspalts in die Entnahmeeinrichtung integriert ausgeführt oder als ein quer zum Auströmspalt angeordneter Dosierarm, dessen freies Dosierende längs des Dosierspaltes bewegbar ist, während das Hybridkieselsäurematerial dosiert wird. So wird bevorzugt aus der Luft ein längs in die Trombe gelegter Hybridkieselsäurematerial-Faden eingebracht, mit vorteilhaft großer Oberfläche zum Abreagieren im Katalysator Wasser. Es bleibt nicht ein Sammelfaden im Wasser bestehen und wird in den Strudel eingedreht. Es kommt zu Abrissen und Verteilungen. Die Dosierung mit einer Relativgeschwindigkeit des dosierten Materialtropfens zur Wasseroberfläche bewirkte eine erstaunlich erhebliche Steigerung der Trennwirkung.

Um im Fall der integrierten Dosiereinrichtung während des Aufströmens eine durch die Entnahmeeinrichtung nach oben gerichtete Spaltaufströmung nicht zu behindern, dichtet eine Dosierstange bevorzugt als ein drehbares Rohrelement gegen ein Leitblech der Entnahmeeinrichtung ab. Dreht die derart in der Entnahmeeinrichtung gelagerte Dosierstange zu deren Deaktivierung während des Aufströmens des Trombenwassers in der Entnahmeeinrichtung ihre Dosieröffnungen ein, streift noch austropfendes Hybridkieselsäurematerial ins Wasser ab.

Alternativ ist die Dosiereinrichtung oben im Deckel angeordnet und kommt dort im Regelbetrieb mit nichts anderem in Berührung. Das hier den gesamten Klärungsprozess und die gewünschte Trombenbildung überhaupt erst ermöglichende Additiv Hybridkieselsäurematerial ist eher klebriger Konsistenz und neigt zum Aushärten bei Berührung mit Wasser. Zum Abreagieren braucht das Additiv Zeit. Eine wartungsarme Dosierung gelingt aus der Luft auf eine vorteilhafte Art sehr prozesssicher. Eine Dosierung im Wasser ist problematischer, weil in diesem Fall ein Zusetzen der Dosierlöcher mit aushärtendem Material zu verhindern ist. Weitere vorteilhafte Ausführungsformen sind Gegenstand jeweiliger Unteransprüche, deren Merkmale nachfolgend im Fall von konkreten Ausführungsbeispielen unterstützend beschrieben werden. Die Gegenstände der Unteransprüche sind deswegen aber nicht auf das darstellende Ausführungsbeispiel beschränkt.

Den nachfolgenden Figuren sind zwei Ausführungsbeispiele für Verfahrensvarianten und drei Ausführungsbeispiele für Entnahmeeinrichtungsvarianten zu entnehmen, auf welche die Erfindung nicht beschränkt ist.

Die Figuren zeigen:
Figur 1 - ein Ausführungsbeispiel eines erfindungsgemäßen Rührbehälters in einer schematischen perspektivischen Darstellung, mit eingetragenem Schnitt A-A (vgl. Figur 2), zur Durchführung eines erfindungsgemäßen Verfahrens nach einem ersten Ausführungsbeispiel, wie insbesondere in den Figuren 3 und 4 gezeigt,
Figur 2 - eine zum Erhalt der Orientierung nicht vollständig korrekte Schnittdarstellung entlang des Schnitts A-A durch den Rührbehälter aus Fig. 1, wobei tangentiale Ab- bzw. Zuläufe links nicht geschnitten dargestellt sind,
Figur 3 - eine Anordnungsskizze für ein Ausführungsbeispiel einer erfindungsgemäßen, in einem Standardüberseecontainer installierten Wasseraufbereitungsanlage zur Durchführung des erfindungsgemäßen Verfahrens gemäß dem ersten Ausführungsbeispiel mit Rührbehältern nach Figur 1 als Ansicht von oben,
Figur 4 - eine schematische Darstellung einer Momentaufnahme in dem Verfahren gemäß dem ersten Ausführungsbeispiel nach den Figuren 1 bis 3 mit Füllständen dreier Rührbehälter zur koordinierten Verwendung vor einer gemeinsamen Siebeinheit (nur in Figur 3 dargestellt),
Figur 5 - eine perspektivische Ansicht von schräg oben auf einen Einbaurohling einer erfindungsgemäßen Entnahmeeinrichtung nach einem ersten Ausführungsbeispiel, wie in dem Rührbehälter der Figur 1 eingesetzt,
Figur 6a - eine Seitenansicht auf einen Strömungssortierbehälter zur Durchführung eines erfindungsgemäßen Wasseraufbereitungsverfahrens nach einem zweiten Ausführungsbeispiel, nämlich zur kontinuierlichen Entfernung von Mikroplastik,
Figur 6b - eine Ansicht von oben auf den Strömungssortierbehälter aus Figur 6a, ohne eingesetzte Entnahmeeinrichtung,
Figur 7a - eine schematische Schnittdarstellung, etwa mittig durch einen Einbaurohling einer erfindungsgemäßen Entnahmeeinrichtung nach einem zweiten Ausführungsbeispiel geschnitten, mit gerader Überlaufkante,
Figur 7b - eine Draufsicht auf den Einbaurohling der Figur 7a, mit noch nach unten bis zu einem Senkdichtabschluss herausziehbaren oder unten bündig eingeschweißten Ablaufstutzen,
Figur 8a - eine perspektivische Darstellung einer Entnahmeeinrichtung zum Aufflaschen gemäß einer dritten Ausführungsform mit zentralem Ausströmzirkel,
Figur 8b - die Entnahmeeinrichtung aus Figur 8a in Draufsicht mit eingetragenem Schnitt A-A durch eine Ablaufrinne,
Figur 8c - den Schnitt A-A durch die Ablaufrinne der Entnahmeeinrichtung aus den Figuren 8a und 8b.

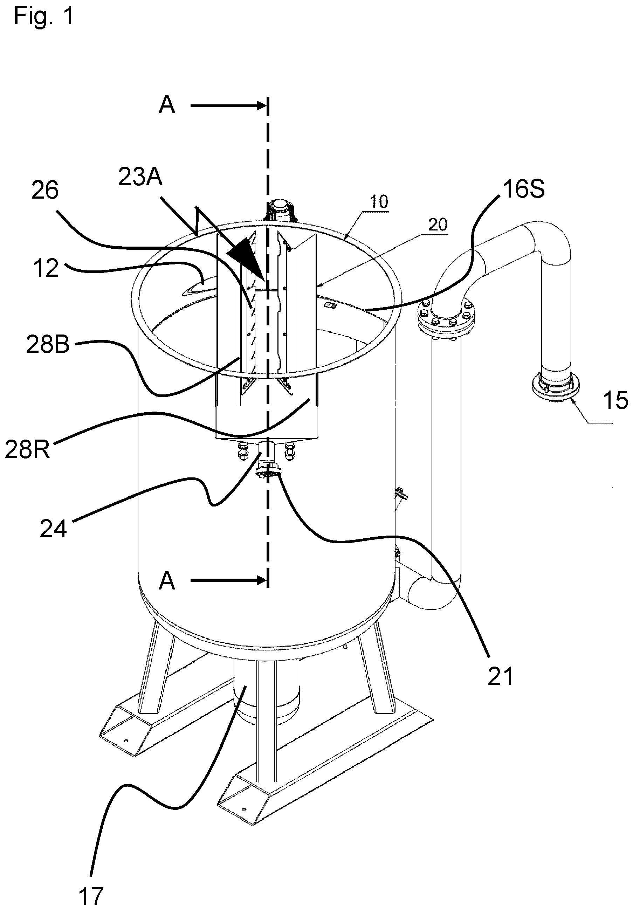

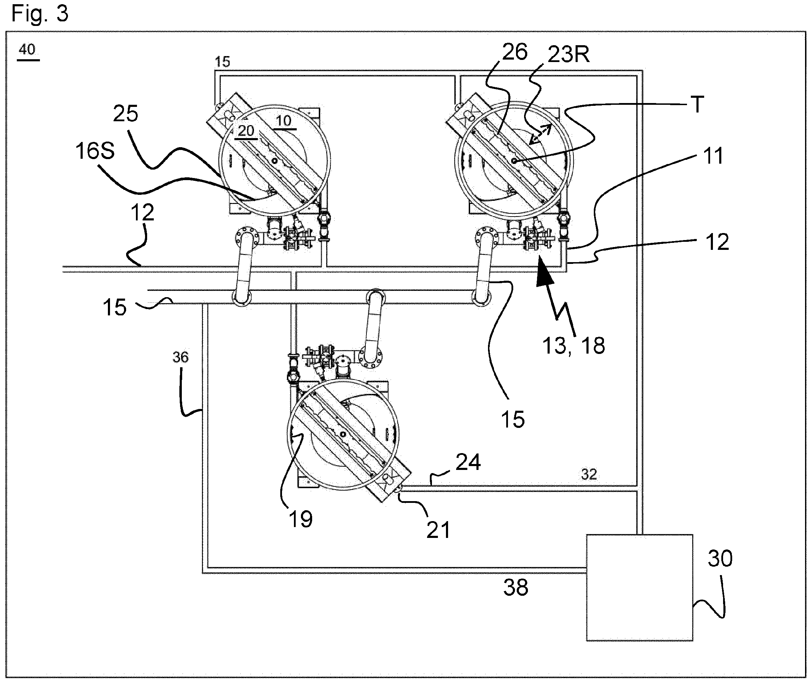

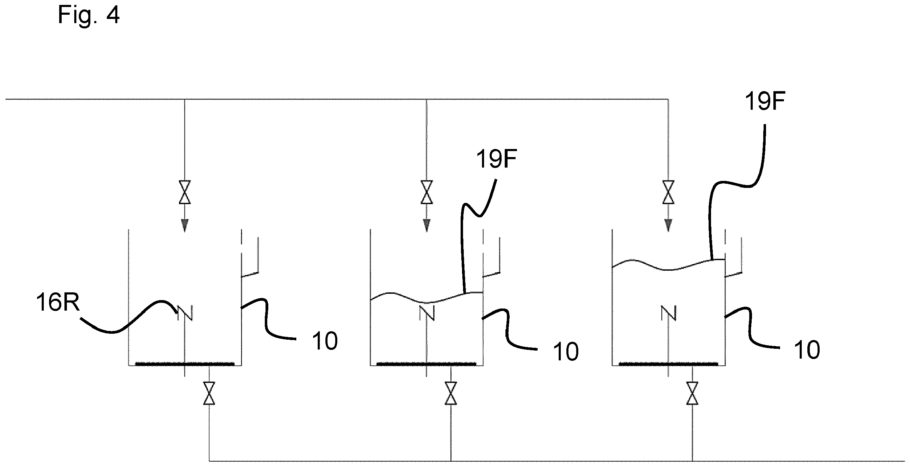

**Figur** 1 zeigt ein Ausführungsbeispiel eines erfindungsgemäßen Rührbehälters 10 als Mischbehälter zur Wasseraufbereitung. In den Rührbehälter 10 ist eine Entnahmeeinrichtung 20 eingesetzt, bevorzugt eingeschweißt. Auf einer Seite (dem Betrachter entgegen) durchtritt die Entnahmeeinrichtung 20 die Wand des Rührbehälters 10. Es wird erfindungsgemäß durch die Entnahmeeinrichtung hindurch mit Agglomeraten angereichertes Wasser seitlich aus dem Rührbehälter 10 ausgeleitet, wobei in Figur 1 kein Wasser und keine Agglomerate dargestellt sind. Lediglich Figur 4 zeigt schematisch eine Momentaufnahme in dem Verfahren gemäß dem ersten Ausführungsbeispiel "Rührbehälter" nach den Figuren 1 bis 3 mit Füllständen dreier Rührbehälter zur koordinierten Verwendung vor einer gemeinsamen Siebeinheit 30 (nur in Figur 3 dargestellt).

Eine in **Figur 3****,** als ein nicht den Schutzbereich der Erfindung einschränkendes, besonders kompaktes Ausführungsbeispiel, als eine Art Anordnungsplan dargestellte, erfindungsgemäße Wasseraufbereitungsanlage 40 zur Entfernung von Mikroplastik aus zu reinigendem Wasser 12, weist als wesentliche Trennaggregate drei den Gesamtreinigungsprozess in ihrer getakteten Arbeitsweise gemeinsam betrachtet beinahe kontinuierlich wirkende jeweils diskontinuierlich arbeitende Rührbehälter 10 auf. Die darin etwas versetzt nebeneinandergestellten drei Behälter sind bevorzugt solche gemäß Figur 1. Im jeweiligen oberen Behälterbereich werden mittels einer Entnahmeeinrichtung 20 in einer Trombe aufkonzentrierte Agglomerate abgetrennt.

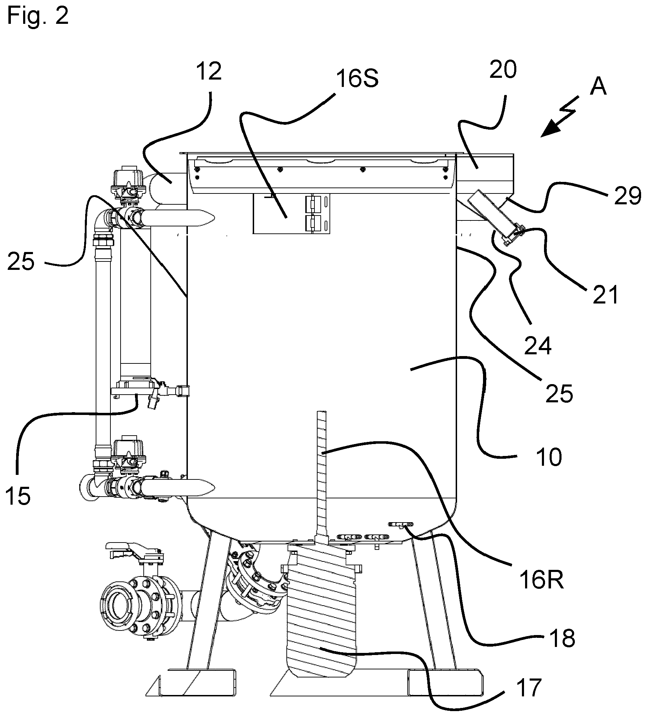

Das ebenfalls die Erfindung nicht beschränkendes Ausführungsbeispiel eines solchen Rührbehälters 10 mit einer vorteilhaft ausgestalteten Entnahmeeinrichtung 20 ist in den **Figuren 1** **und** 2 dargestellt.

Die Entnahmeeinrichtung 20 ist horizontal ausgerichtet oben in den Rührbehälter 10 radial mittig eingesetzt und durchbricht auf einer Seite die Behälterwand. Dabei ist ein zentraler Überlauf durchleitend abgedichtet radial mit Gefälle nach außen geführt, ohne dass es einer Pumpe bedarf.

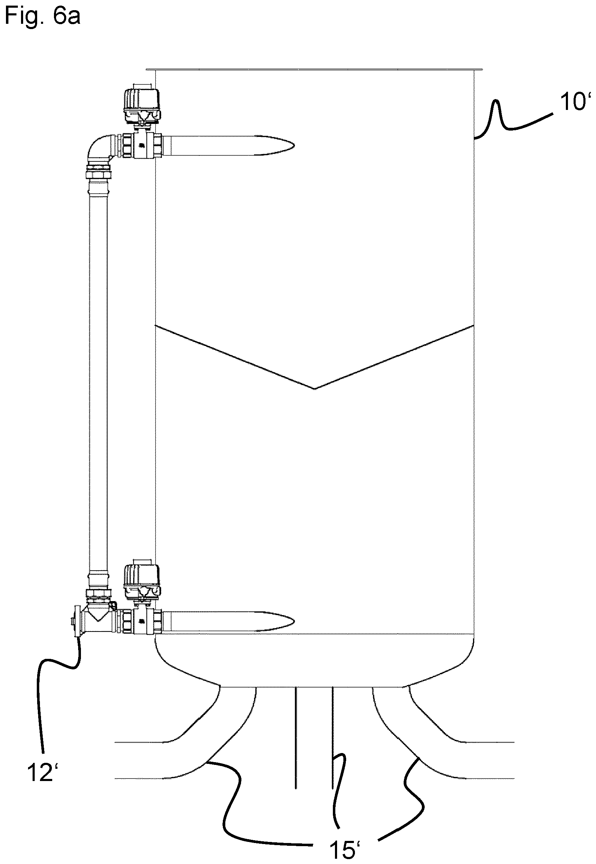

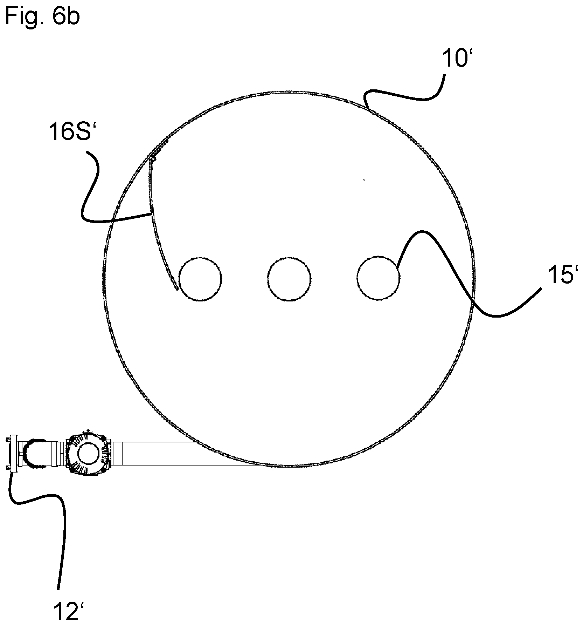

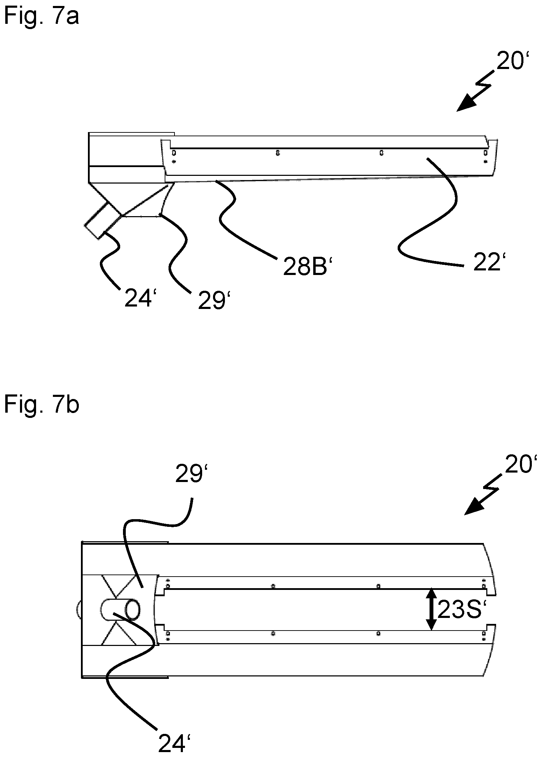

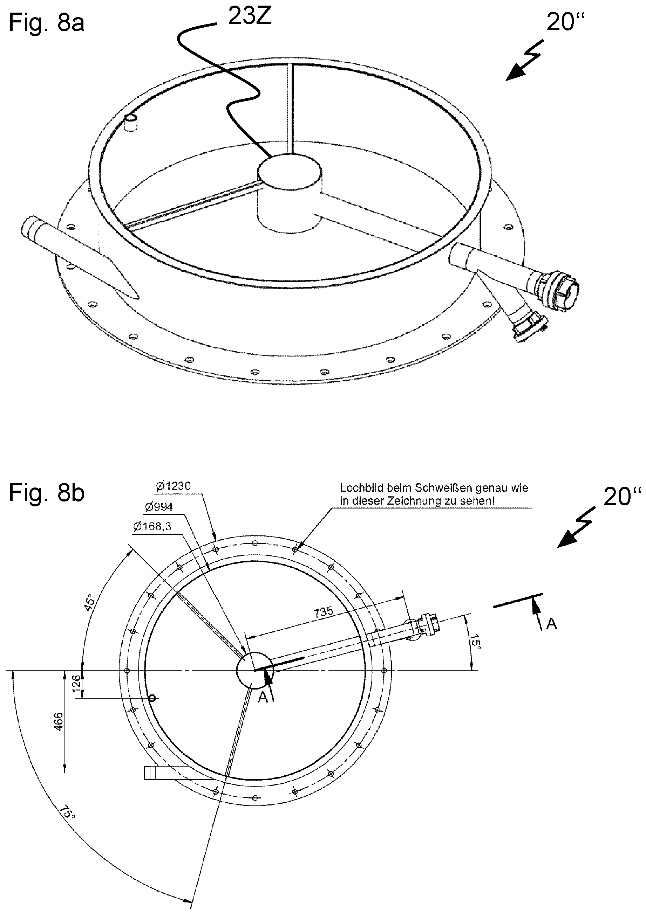

Alternativ wird eine der in **Figuren 7a und 7b** oder in Figuren 8a bis 8c dargestellten Ausführungsformen vorteilhafter erfindungsgemäßer Entnahmeeinrichtungen 20', 20" oben in den Rührbehälter 10 oder in einen Strömungstrennbehälter 10' **(****Figuren 6a****,** **6b****)** zum kontinuierlichen Abtrennen der Agglomerate eingesetzt. Der Strömungstrennbehälter wird auch Rotationsbehälter genannt, was aber beides eigentlich ebenso auf den Rührbehälter zutrifft. In der Erfindung ist die Ausbildung einer Trombe als Zentrum einer rotierenden Strömung Trennvoraussetzung, wie bereits aus dem Stand der Technik bekannt. Die Trombenbildung ist in allen gezeigten Behältervarianten ermöglicht.

Im oberen Teil des Rührbehälters 10, 10' ist innen ein Arm 16S angeordnet. Der Arm 16S und die tangentiale Einströmung bewirken gemeinsam besonders prozesssicher, dass alle Partikel in Richtung Trombenmitte wandern.

Ebenfalls oben im Rührbehälter 10, 10' sind unterhalb der Entnahmeeinrichtung 20 als Bestandteil der Entnahmeeinrichtung 20 Leitbleche 16L angeordnet. Die Leitbleche bewirken, dass die Agglomerate möglichst vollständig bis zur in der Entnahmeeinrichtung 20, 20', 20" angeordneten Überschlagskante mit oder ohne Zahnung 26, 26', 26" nach oben steigen.

Unten im Rührbehälter 10 dosiert eine über den Radius verteilt angeordnete Belüftungseinheit 18, die zentrale Aufströmung unterstützend, feine Luftblasen. Das Agglomerieren in der Trombe wird in einer vorteilhaften Ausführungsform zusätzlich dadurch optimiert, dass außen der rotierenden Abströmung im Behälter kaum oder keine Luft entgegenströmt. Radial innen bildet sich prozesssicher eine aufströmende, rotierende Trombe mit gesammelten Mikroplastikagglomeraten aus.

Es ist ein im Gang der Erfindung ermittelter vorher nicht absehbarer Erfolg, dass sich mittels Luftdosierung eine Barrierenebene oder -zone im Behälter ausbilden lässt. Ein Vermischen von zu reinigendem Prozesswasser oder gar Trombenwasser mit dem sich unten im Behälter sammelnden oder abzuziehenden gereinigten Wasser wird prozesssicher verhindert.

Eine besonders bevorzugte Ausführungsform weist eine Dosiereinrichtung (nicht dargestellt) auf, die oberhalb des Flüssigkeitsspiegels im Behälter 10, 10' angeordnet ist, bevorzugt in einem Behälterdeckel. Sie weist ein zumindest grob radial verfahrbares Dosierende auf, bevorzugt ein an einem schwenkenden Teleskopstab angeordnetes Dosierende. Eine oder mehrere Dosieröffnung(en) verteilen über eine bestimmte Länge des Aufströmspaltes 23 hinweg Zugabestoff, insbesondere Hybridkieselgelmaterial, in das Trombenwasser, in dem bevorzugt Mikroplastikpartikel aufkonzentriert an eine trichterförmig turbulente Flüssigkeitsoberfläche gewirbelt werden und dort bevorzugt mit einer Art Hybridkieselmaterialfilm in Berührung gelangen.

Der bevorzugt verwendete in die Entnahmeeinrichtung integrierte Dosierstab wird nach dieser vorteilhaften Ausführungsform über einen Dosierzeitraum hinweg zumindest einmal in einem Klärzyklus Hybridkieselmaterial ausströmend radial eingefahren und wieder herausgefahren (mit der Behälterwand bündige Parkposition).

Auf diese Arten der Dosierung soll die Erfindung aber nicht eingeschränkt sein. Eine die spätere Aufströmung nicht störende Integration der Dosiereinrichtung in die Entnahmeeinrichtung zur Dosierung im Aufströmspalt, wenn der Flüssigkeitsspiegel im Behälter noch im Bereich 1/3 bis 3/4 der Behälterhöhe liegt, ist eine alternative vorteilhafte Ausführungsform, in diesem Fall nicht mobil sondern fest installiert. Es handelt sich dabei um eine nicht in Figuren dargestellte vorteilhafte Ausführungsform. Der Vorteil besteht im dadurch verbesserten Wirkungsgrad des Hilfsstoffs (Zugabestoffs). Die Dosiereinrichtung dosiert gemäß einer weiteren besonders bevorzugten Ausführungsform der Erfindung zwischendurch, beispielsweise in Dosiersequenzen, während des Wachsens der Trombe.

In der Entnahmeeinrichtung 20 sind zwei Rinnen 28R mit zur durchbrochenen Behälterseitenwand 25 hin gegenüber der Horizontalen in einem Winkel von bevorzugt 1° bis 3°, besonders bevorzugt 1,2° abfallenden Rinnenböden 28B angeordnet. Zwischen den Rinnen 28R verläuft ein Aufströmspalt 23S. Auf den dem Aufströmspalt 23S zugewandten Längsseiten sind die einander zugewandten Rinnenseitenwände der Rinnen 28R jeweils oben gezahnt 26, 26', 26" und/oder gezackt.

Die Überschlagskanten seitlich des Aufströmspaltes sind in bevorzugten Ausführungsformen demnach mit einer besonderen Geometrie versehen, sodass die Agglomerate mit besonders wenigen Strömungsstörungen in die Ablaufrinnen 28R, 28R" gelangen und abfließen können. Dies ist auch im Fall des dritten Ausführungsbeispiels "Aufströmzirkel" der Figuren 8A bis 8C nicht grundsätzlich anders zu verstehen. Die Überschlagskanten bevorzugter gerader Ausführungsformen sind die Strömung beeinflussend verstellbar ausgestaltet, um im jeweiligen Anwendungsfall verstellt werden zu können. Es haben sich für bestimmte Formen der Agglomerate bestimmte Geometrien als vorteilhaft erwiesen, besonders die gezahnte Form einer hier näher besprochenen Ausführungsform mit in der Abtrenneinrichtung verschiebbarer Zahnung. Hier gibt es darüber hinaus aber auch erfindungsgemäße Ausgestaltungen mit sinusförmigen Kantenausprägungen, die gleichmäßig geformt sind, als Austauschkanten. So auch Wellenmuster mit unterschiedlichen Wellenhöhen (nicht dargestellt). Des Weiteren kam in bestimmten Fällen auch vorteilhaft eine gezackte Form zum Einsatz (nicht dargestellt).

Das in den Entnahmeeinrichtungen 20, 20', 20" überlaufende Agglomeratwasser 21 wird einer einzigen, zentralen Siebeinheit 30 zugeführt.

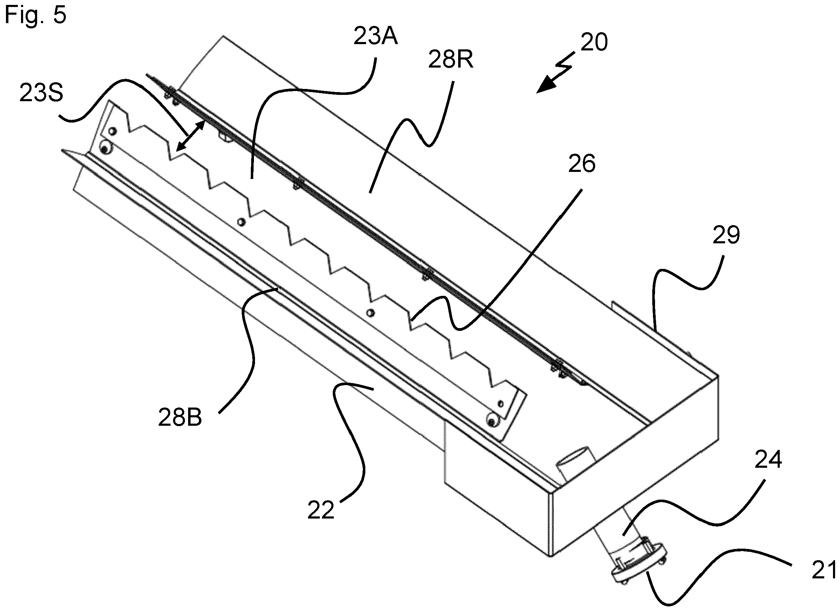

Interhalb der Rinnen 28R weist eine bevorzugte Entnahmeeinrichtung 20 Leitbleche 22 auf, vgl. **Figur 5****.** Die Leitbleche 22 verlaufen längs des Aufströmspaltes zwischen den Rinnen 28R von oben durch in den Aufströmspalt schauend nach unten seitlich auseinander. Die Trombe wird auf diese Art von der Entnahmeeinrichtung 20 empfangen und sanft in die Behälter-breite entlang der Rinnen 28R geleitet. Bevorzugt formen die Leitbleche 22 und die je Rinne 28R inneren Rinnenwände gerade ineinander übergehend einer Linie folgend ohne Strömungsabrisskante einen homogenen Aufströmspalt. Ein derart ausgeformter Aufströmspalt ist mehr als ein seitlicher Ablauf. Er leistet eine Bewegungsumformung mit Strömungsführung aus der Rotation nach oben in den Überlauf und dann von selbst durch die Rinne ablaufend zur Seite aus dem Behälter hinaus.

Im Rührbehälter 10 wird gerührt, dosiert, belüftet und gemischt. Die oben im Rührbehälter 10 grob horizontal angeordnete Entnahmeeinrichtung 20 funktioniert rein mechanisch und antriebslos. Die oben bereits erwähnte Zahnung 26, 26', 26" verläuft in der jeweiligen Rinne 29R mit einer nichtgezahnten Seitenwand gegenüber nach unten aufeinander zu, wobei die äußere, nicht gezahnte Seitenwand der Rinne 28R eine etwas höher liegende Oberkante aufweist, über die hinweg kein Prozesswasser/Trombenwasser von außen in die Rinne 28R überfließt. Die dazwischen ausgebildete Rinne 29R hat den einseitig zur Seitenwand des Rührbehälters 10 hin abfallend ausgebildeten Rinnenboden 29B. Die Rinne 29R ist mithin zu einem seitlichen Agglomeratablauf 24 hin abfallend ausgebildet. An ihrer tiefsten Stelle durchstößt die Rinne 29R und damit die Entnahmeeinrichtung 20 die Seitenwand 25 des Rührbehälters 10 in dessen oberen Behälterbereich. Die beiden parallelen Rinnen 29R münden in einer Sammelwanne 29 mit dem Agglomeratablauf 24, sodass keine Pumpe benötigt wird aber dennoch zumindest nahezu keine Agglomerate in Toträumen gesammelt werden und zur Verstopfung der Entnahmeeinrichtung 20 beitragen. Es gelingt damit ein störungsfreier seitlicher Abtransport der in der Trombe gesammelten Mikroplastikagglomerate aus dem Rührbehälter 10 auf die Siebeinheit 30.

Die Zahnungen 26 sind nach einer vorteilhaften Ausführungsform der Erfindung innen einander zugewandt angeordnet, um einen aufströmenden Trombenstrom in besonders hoher Agglomeratkonzentration überlaufen zu lassen, ohne aktiv abschöpfen zu müssen. Der Anordnung gelingt es, die kreisende Strömungsbewegung in eine lineare Aufströmbewegung umzuleiten.

Vorteilhafte Aufströmspaltbreiten 29 betragen etwa 25 % bis 40 % des Rührbehälterdurchmessers.

Neben der Entnahmeeinrichtung 20 verbleibende freie Kreisausschnitte haben vorteilhaft Radienabschnittslängen zwischen etwa 30 % und 38 % des Rührbehälterdurchmessers.

Gemäß einer besonders vorteilhaften Ausführungsform ist die Entnahmeeinrichtung als ein bis auf den Aufströmspalt vollständig nach unten flach und horizontal geschlossener Deckel ausgeformt (nicht dargestellt).

Ein gesondertes Abscheidebecken entfällt, das den Investitionsaufwand vergrößert hätte.

Gemäß einer bevorzugten Ausführungsform läuft ein erfindungsgemäßes Verfahren wie folgt ab:
Zu reinigendes Wasser wird oben tangential in den Rührbehälter 10 aus dem Zulauf 12 eingeleitet und unterstützt damit die später durch den Rührer 16R verstärkte kreisende Flüssigkeitsbewegung, bevorzugt mit 300 bis 700 Umdrehungen pro Minute in einem etwa 150 cm hohen Rührbehälter 10 mit 100 cm Durchmesser.

Eine besonders bevorzugte Verschaltung der Rührbehälter in der hier konkret als ein Ausführungsbeispiel nach Figur 3 vorgeschlagenen Containeranordnung wirkt im Prozessergebnis nach außen, wie eine kontinuierlich betriebene Wasseraufbereitungsanlage 40, obwohl keiner der drei Rührbehälter 10 in dem Container kontinuierlich arbeitet. Dazu sind die drei Rührbehälter 10 im Container so verschaltet, dass von außen ein zumindest annähernd kontinuierlicher Zulauf von zu reinigendem Wasser 12 abgenommen und nach außen ein zumindest weitgehend kontinuierlicher Klarwasserablauf 38, 11 bereitgestellt wird.

Jeder Rührbehälter 10 funktioniert dann mit der bevorzugt gemeinsamen oder jeweiligen Entnahmeeinrichtung 20 wie ein Batchreaktor, beispielsweise wie folgt simultan:
- Behälter 1 ist leer und wird befüllt,
- Behälter 2 befindet sich im Prozess,
- Behälter 3 wird entleert.

Im jeweiligen Rührbehälter 10 gibt es besonders bevorzugten Ausführungsform zusätzlich einen Sammelarm 16S, der im oberen Behälterbereich montiert ist. Der Sammelarm 16S und eine tangentiale Einströmung im oberen Behälterbereich bewirken besonders vorteilhaft, dass alle Partikel Richtung Trombenmitte wandern, in einem besonders effektivem Lokalisierungsprozess.

Außerdem hat sich folgende Kombination aus Belüften, Rühren und Dosieren als vorteilhaft erwiesen: Die Belüftung läuft dauerhaft, da zumindest zeitweise permanent Wasser in den Reaktor eingebracht wird und die Belüftung in der Wasserzuleitung durchströmungsgeschwindigkeitsabhängig gelingt. Es sammeln sich alle Partikel gleich welcher Dichte in der Trombe, wo der Fixierungsprozess gelingt. Dazu wird immer wieder das anorganisch-organisches Hybridkieselsäurematerial zudosiert.

Am Ende des Prozesses im Rührbehälter 20 nach Entnahme auf der Siebeinheit 30 aufgefangene Feststoffe werden beispielsweise als Zuschlagstoff in der Bauindustrie verwendet. Die Siebeinheit 30 ist beispielweise als ein Lochblech oder als ein rückspülbarer Sandfilter ausgeführt. Bevorzugte Lochblechweiten liegen im Bereich von 0,1 bis 2,5 mm.

In einem zweiten Ausführungsbeispiel eines erfindungsgemäßen Wasseraufbereitungsverfahrens in einem etwas höher bauenden Rotationstrennbehälter 10' gemäß **Figuren 6a** **und** **6b** wird zu reinigendes Wasser zum Großteil unten, bevorzugt zu 10 % unten und 90% oben tangential in den Strömungstrennbehälter 10' aus dem Zulauf 12 eingeleitet und bewirkt damit die in diesem Ausführungsbeispiel durch keinen Rührer mehr verstärkt kreisende Flüssigkeitsbewegung, bevorzugt mit 150 bis 500 Umdrehungen pro Minute in einem etwa 2 m hohen Behälter 10' mit 100 cm Durchmesser.

Hierin ist demnach ebenfalls dem Erfindungsgedanken folgend nun eine kontinuierliche Fahrweise ohne Rührer umgesetzt. Aber auch in der Behältervariante 10 nach Figur 1 mit Rührer 16R und kontinuierlicher Belüftung ist eine kontinuierliche Fahrweise umsetzbar, wobei unten dezentral gereinigtes Wasser kontinuierlich abgezogen wird. In der Behältermitte erfolgt der Trombenaufbau und die eingeleitete rotierende zu reinigende Flüssigkeit steigt im Spiegel an, bis oben zu einem bestimmten Zeitpunkt gezielt mittels der Entnahmevorrichtung 20, 20' abgeschlagen wird.

Eine nicht dargestellte Kamera über dem Reaktor, egal ob Rührbehälter 10 oder Rotationstrennbehälter 10', kann in einem vorteilhaft besonders weit automatisierten Ausführungsbeispiel dieses Verfahrens in den Aufströmspalt hineinsehen, bevorzugt zusätzlich ein anlernbarer Sensor. So wird ohne manuellen Eingriff beobachtet, wann zumindest beinahe alle Agglomerate übergelaufen sind. Diese Art der Überwachung beobachtet bevorzugt aber schon vorher, wie viele Agglomerate oder wie dicht Agglomerate in der Trombe gesammelt sind. Eine erfindungsgemäße Regelung ist mit deren Signalen nun in der Lage zu entscheiden, wann sich ein Anstauen zur Nutzung der Entnahmeeinrichtung 20, 20' lohnt.

In dem Strömungstrennbehälter 10' nach **Figur 6a****/****6b** sind unten Abläufe 15' vorgesehen, um gereinigtes Wasser kontinuierlich abziehen zu können. Es ist ein zentraler Ablauf 15' anstelle eines sonst gemäß dem ersten Ausführungsbeispiel (Figur 1) diesen Zugang blockierenden Rührers in großen Anteilen möglich gewesen, bevorzugt 80 % bei Aufteilung der weiteren 20 % auf seitlich benachbarte Abläufe 15', je nach Durchsatz im kontinuierlichen Betrieb. Die Trombe, bzw. deren kelchförmiger Strudelhals, ist bei dieser erfindungsgemäßen Verfahrensvariante auf etwa 1/3 bis 2/3 der Behälterhöhe zu strecken. Das gelingt nach dieser Erfindungsvariante allein über Steuerung der Ablaufdurchflussmengen unten in Aufteilung zentral/dezentral und Zulaufdurchflussmengen in Aufteilung oben/unten ein störungsfreier Betrieb.

Die oben erwähnte Automatisierbarkeit mittels Kamera- und/oder Sensorüberwachung wird bevorzugt von auf die Wasseroberfläche gerichtet umgesetzt, um Störkörper oder Schaumbildungen zu erkennen, die eine Dosierung des Hybridkieselsäurematerials unwirksam machen könnten. Die Überwachungsmittel sind aber darüber hinaus bevorzugt auch dazu eingesetzt, um die Trombenreife zu ermitteln. Sind ausreichend viele Lokalisierungs- und Fixierungsprozesse abgelaufen, lohnt sich ein "Ausatmen", also ein Aufströmen durch die Entnahmeenrichtung nach oben in den Überlauf Richtung Siebeinheit. Besonders bevorzugte Automatisierungsmittel funktionieren in der Art einer Polarisationsbrille, um wegen der Vermeidung von Spiegelungen an Wasseroberflächen tiefer in das Trombenwasser zu "sehen".

Eine weitere vorteilhafte Ausführungsform im Rahmen der Erfindung (nicht dargestellt) setzt eine weitere Siebeinheit oder die bereits am Ende des Prozesses vorgesehene Siebeinheit zu Beginn des Aufbereitungsprozesses ein. Die Siebeinheit wird nach dieser besonders bevorzugten Verfahrensvariante am Anfang des Aufbereitungsverfahrens in die Befüllleitung mit zu reinigendem Wasser eingeschaltet, um zu verhindern, dass Grobes in den Reaktor gelangt, das den Wirkungsgrad des Additivs senken könnte.

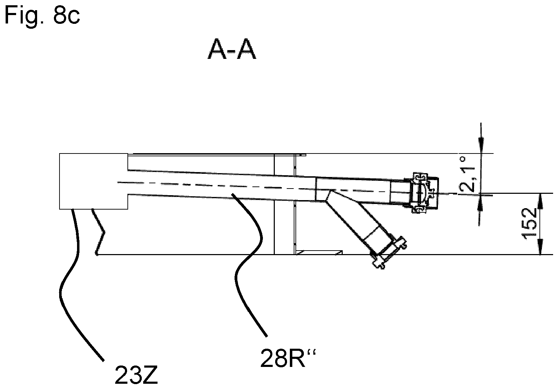

Das dritte Ausführungsbeispiel "Aufströmzirkel 23Z" einer erfindungsgemäßen Entnahmeeinrichtung gemäß den **Figuren 8A bis 8C** arbeitet ebenfalls pumpenlos mit einer Überschlagskante und einer Ablaufrinne mit abfallendem Rinnenboden 28R". Die Kante, über welche die überlaufenden Agglomerate in diesem Beispiel abgeschlagen werden, ist hierbei nicht gerade einmal quer über die Füllstandsfläche hinweg ausgebildet, sondern als Rinneneintritt in einem geschützten Zirkel. Der in Figur 8A/8B zentral mittels zweier Streben von der Rinne abgewandt nach hinten gegen die Behälterwand bzw. den Flanschring abgestützte Aufströmring entspricht in seinem Radius etwa dem Tronbenradius, um die nach oben strömende Trombe zu "fangen" und einzuhausen. Nach oben und unten ist der zur Rinne hin offene Ring ohne Deckel oder Boden ausgebildet. Auch diese Entnahmeeinrichtung 20" dient der Strömungsführung. Die bereits beschriebende Behältertrömung innen nach oben, an den Seiten herunter, bewirkt an der Flüssigkeitsoberfläche im Mischbehälter 10, 10' eine Tendenz, die Agglomerate nach radial außen zu ziehen. Dieser Tendenz wirkt der Ring trennend entgegen und das Gefälle der Rinne genügt auch hierbei, um die dort geschützt in die Rinne gezwungenen Agglomerate ablaufen zu lassen oder quasi abzuziehen. Es ist mittels des zentralen Rings ein Spiel mit dem Wasserdruck zur Steigerung des Zwangs ermöglicht, weil er eine gewisse Höhe hat und die Rinne, hierbei als Radialrohr (vgl. Draufsicht in Figur 8B) mit Gefälle nach außen ausgeführt, vgl. Schnittdarstellung in Figur 8C, im oder leicht unterhalb des Flüssigkeitsspiegels im Behälter 10, 10" verlaufen kann. In vorteilhaften Ausführungsformen ist der Ring nach unten Trichterförmig aufgeweitet (nicht dargestellt). Weiterhin ist in einer nicht dargestellten vorteilhaften Ausführungsform die Rinne zum Ring hin abgeflacht, sodass eine breitgezogene Überlaufkante die Agglomerate empfängt.

### Bezugszeichenliste:

- 10: Rührbehälter
- 10': Rotationstrennbehälter
- 11: Klarwasserzuleitung
- 12, 12': Zulauf
- 13: Zuluftpumpe
- 14: Dosierleitung, Schlauchkolbenpumpe, Pumpe nach dem Verdrängerprinzip, immer gleiches Volumen
- 15, 15': Ablauf
- 16S, 16S': Sammelarm
- 16R: Rührer
- 17: Rührantrieb
- 18: Belüftungseinheit
- 19F: Füllstandsmesser

- 20, 20', 20": Entnahmeeinrichtung
- 21: Agglomeratablaufventil
- 22: Leitblech
- 23A: Aufströmspalt
- 23S, 23S': Aufströmspaltbreite
- 23R: Radienabschnittslänge
- 23Z: Aufströmzirkel
- 24, 24': Agglomeratablauf
- 25, 25': Seitenwand
- 26, 26', 26": Zahnung
- 28B, 28B': Rinnenboden
- 28R, 28R": Rinne
- 29, 29': Sammelwanne

- 30: Siebeinheit
- 32: Siebzuleitung
- 36: Filtratrückführung
- 38: Filtratleitung

- 40: Wasseraufbereitungsanlage

- A: Spalt- und/oder Zirkelaufströmung
- T: Trombenmittenachse

## Patentansprüche

1. Wasseraufbereitungsverfahren zur Entfernung von Schadstoffen aus Wasser, insbesondere Mikroplastik, welches dem aufzubereitenden Wasser zumindest einen Agglomerate bildenden Zugabestoff zudosiert und nach zumindest einem Verfahren der mechanischen Verfahrenstechnik die Agglomerate in einen oberen Behälterbereich unter Ausbildung einer Trombe aufkonzentriert und abtrennt,
**dadurch gekennzeichnet, dass**
in dem oberen Behälterbereich die in der Trombe aufkonzentrierten Agglomerate in eine zumindest grob horizontal angeordnete Entnahmeeinrichtung (20, 20') überlaufen, mittels derer eine Bewegungsumformung aus der Trombenzirkulation um eine zentrale Trombenmittenachse (T) in eine Spalt- und/oder Zirkelaufströmung (A) bewirkt wird.

2. Wasseraufbereitungsverfahren nach Anspruch 1,
**dadurch gekennzeichnet, dass**
die Agglomerate pulsierend überlaufen, einem Reaktorbefüll- und Entleerzyklus mit schwankendem Rührbehälterfüllstand (10)
2.1 Trombenauftrieb mittels Klarwasser,
2.2 partielle Entleerung,
2.3 Neubefüllung mit zu reinigendem Wasser,
folgend.

3. Wasseraufbereitungsverfahren nach Anspruch 1 oder 2,
**dadurch gekennzeichnet, dass**
nach dem Dosieren des Zugabestoffes, insbesondere eines Hybridkieselsäurematerials, durch ein Eintropfen von oben aus der Luft, in die Trombe zumindest zeitweise die Schadstoffe in den Agglomeraten fixiert und gleichzeitig in der Trombe aufkonzentriert (Lokalisieren) werden.

4. Wasseraufbereitungsverfahren nach einem der vorangehenden Ansprüche,
**dadurch gekennzeichnet, dass**
im Höhenbereich etwa oben im unteren Behälterfünftel mittels einer Belüftungseinheit (18) Luft zur Ausbildung einer Sperrebene eingebracht wird, bevorzugt mittels dreier Belüftungsringe im Bereich oberhalb des Bodens oder im Boden integriert.

5. Wasseraufbereitungsverfahren nach einem der vorangehenden Ansprüche,
**dadurch gekennzeichnet, dass**
in einem diskontinuierlichen oder kontinuierlichen, bevorzugt vollständig rührerfreien (10'), Prozess, bei tangentialem Einlauf von zu reinigendem Wasser über eine Höhe eines Strömungstrennbehälters verteilt mit immer etwa gleichen Einströmgeschwindigkeiten aber nicht immer gleich großen Strömungseintrittsquerschnitten, zumindest anteilig zentral durch eine Öffnung im rührerfreien Behälterboden unten gereinigtes Wasser abgezogen wird.

6. Wasseraufbereitungsverfahren mit Verfahrensmerkmalen nach einem der vorangehenden Ansprüche,
**dadurch gekennzeichnet, dass**
aufeinanderfolgend oder ineinander übergehend
6.1 zunächst der Füllstand des zu reinigenden Wassers (12) in einem Behälter erhöht wird, wobei sich ein Rührer (16R) in einem Rührbehälter (10) dreht oder wonach ein Rührer (16R) sich darin zu drehen beginnt,
6.2 der Zugabestoff, insbesondere anorganisch-organisches Hybridkieselsäurematerial, zudosiert (14) wird, sodass sich im zirkulierenden Wasser eine Trombengeometrie (Lokalisieren) mit wachsenden Agglomeraten (Fixieren) um eine Trombenmittenachse (T) ausbildet,
6.3 Agglomerate in einem zentralen oberen Behälterbereich lokalisiert werden,
6.4 Agglomerate wegen weiterer Klarwasserzuleitung (11) von unten aus dem Zirkulieren heraus quer zu einer Trombenmittenachse (T) in die Entnahmeeinrichtung (20) in dem oberen Behälterbreich des Rührbehälters (10) seitlich abfließen,
um schließlich
6.5 behälterextern unter Gewinnung eines Klarwasserfiltrats abgesiebt (30) zu werden.

7. Wasseraufbereitungsverfahren nach einem der vorangehenden Ansprüche,
**dadurch gekennzeichnet, dass**
es zyklisch wiederholt abläuft, ohne dass zwischendurch der Behälter (10, 10') restentleert wird,
wobei im besonders bevorzugten Fall des Anspruchs 6 in Verfahrensschritt 6.4 das Klarwasserfiltrat aus Verfahrensschritt 6.5 oder Brauchwasser unten in den Rührbehälter (10) zugeleitet (11) wird, um oben die in der drehenden Trombe lokalisierten Agglomerate zu bevorzugt 90 % mittels der Entnahmeeinrichtung (20, 20', 20") auszutragen,
und wobei, nach dem Abfließen der Agglomerate durch die oben angeordnete Entnahmeeinrichtung (20, 20', 20"), unten aus dem Rührbehälter (10, 10') gereinigtes Wasser als ein Gutstoffstrom durch einen Ablauf (15) abgelassen wird, besonders bevorzugt in einen Klarwasser-Pulstank mit einem Gutstoffüberlauf.

8. Wasseraufbereitungsanlage (40) zur Entfernung von insbesondere Mikroplastik aus zu reinigendem Wasser (12) mit zumindest einem Mischbehälter, in dessen oder deren oberen Behälterbereich(en) in Trombe(n) aufkonzentrierte Agglomerate abgetrennt werden,
**dadurch gekennzeichnet, dass**
für ein Abschlagen der Agglomerate zumindest eine Entnahmeeinrichtung (20, 20', 20"),
bevorzugt eine einzige Entnahmeeinrichtung je Behälter (10, 10') oder eine gemeinsame Entnahmeeinrichtung mehrerer Behälter (10, 10'),
horizontal ausgerichtet oben in den Behälter (10, 10') eingesetzt angeordnet ist und die Entnahmeeinrichtung (20, 20', 20") auf einer Seite die jeweilige Behälterseitenwand (25) eines als Mischbehälter verwendeten Rührbehälters (10) oder Rotationstrennbehälters (10') einen zentralen Überlauf nach oben durchleitend (A) abgedichtet durchbricht, bevorzugt zu ausschließlich einer Seite hin.

9. Wasseraufbereitungsanlage (40) nach Anspruch 8,
**dadurch gekennzeichnet, dass**
im oberen Teil des Mischbehälters (10, 10') innen, bevorzugt oben im Aufströmspalt kegelförmige Leitbleche (16L) angeordnet sind, radial außen an die Behälterseitenwand (25) anschmiegend und nach radial innen mittels einer der zirkulierenden Anströmung abgewandten Stützwand eine Strömungsturbulenz möglichst vermeidend abgestützt.

10. Wasseraufbereitungsanlage (40) nach Anspruch 8 oder 9,
**dadurch gekennzeichnet, dass**
in der Entnahmeeinrichtung (20, 20', 20") zumindest eine zur durchbrochenen Behälterwand hin abfallende Rinne (28, 28', 28") angeordnet ist, bevorzugt zwei parallel verlaufende Rinnen (28, 28'), die nach oben offen auf einem zwischen den Rinnen verlaufenden Aufströmspalt (23S) zugewandten Längsseiten jeweils gezahnt ausgebildet sind.

11. Wasseraufbereitungsanlage (40) nach einem der Ansprüche 8 bis 10,
**dadurch gekennzeichnet, dass**
das in der/den Entnahmeeinrichtung(en) (20, 20', 20") übergelaufene Agglomeratwasser (21) einer einzigen, insbesondere zentralen Siebeinheit, oder mehreren Siebeinheiten (30) zugeführt (32) ist.

12. Entnahmeeinrichtung (20, 20', 20") für eine Wasseraufbereitungsanlage (40) nach einem der Ansprüche 8 bis 11.

13. Entnahmeeinrichtung (20, 20', 20") nach Anspruch 12,
**dadurch gekennzeichnet, dass**
eine Dosiereinrichtung längs eines Aufströmspalts, bevorzugt integriert, angeordnet ist, um während des Aufströmens eine durch die Entnahmeeinrichtung nach oben gerichtete Spaltaufströmung oder Zirkelaufströmung nicht zu behindern, besonders bevorzugt als ein drehbares Rohrelement zum Abschluss eines Leitblechs oder als ein schwenkbarer Teleskopdosierstab.

14. Entnahmeeinrichtung (20") nach Anspruch 12 oder 13,
**dadurch gekennzeichnet, dass**
als ein zentraler Aufströmzirkel (23Z) ein Ring mit bevorzugt vertikal ausgerichteter Wandung,
besonders bevorzugt nach unten trichterförmig radial nach außen geweiteter Wandung,
oben im Mischbehälter (10, 10') angeordnet ist, wobei der Ring zumindest zu einer Seite hin eine Öffnung der Wandung zur Durchleitung von Agglomeratwasser in eine nach radial außen abfallend ausgebildete Rinne aufweist.
